Europäisches Patentamt

European Patent Office

Office européen des brevets

(11) Numéro de publication: **0 128 089**
**B1**

(19)

(12)

# FASCICULE DE BREVET EUROPEEN

(45) Date de publication du fascicule du brevet: 05.10.88

(21) Numéro de dépôt: 84401111.4

(22) Date de dépôt: 30.05.84

(51) Int. Cl.⁴: **B 23 Q 3/155**

(54) **Perfectionnements aux changeurs d'outil à bras double.**

(30) Priorité: 03.06.83 FR 8309245

(43) Date de publication de la demande:
**12.12.84 Bulletin 84/50**

(45) Mention de la délivrance du brevet:
**05.10.88 Bulletin 88/40**

(84) Etats contractants désignés:
**AT BE CH DE FR GB IT LI LU NL SE**

(56) Documents cités:
**US-A-4 300 278**
**US-A-4 312 111**

(73) Titulaire: **HURON-GRAFFENSTADEN**
**156, route de Lyon**
**F-67400 Illkirch-Graffenstaden (FR)**

(72) Inventeur: **Sachot, Michel**
**55, rue Curie**
**F-91400 Saclay (FR)**
Inventeur: **Rouzaud, Guy**
**1 Avenue de Malabry**
**F-92290 Chatenay-Malabry (FR)**

(74) Mandataire: **Descourtieux, Philippe et al**
**CABINET BEAU de LOMENIE 55 rue**
**d'Amsterdam**
**F-75008 Paris (FR)**

EP 0 128 089 B1

Courier Press, Leamington Spa, England.

## Description

Les machines-outils modernes comportent fréquemment un changeur d'outil utilisant la technique du bras double, c'est-à-dire d'un bras rotatif et coulissant portant deux pinces symétriques et capable, par la combinaison des mouvements de rotation et de coulissement de prendre simultanément l'outil porté par la broche et celui venant du magasin, de les extraire, de les échanger par une rotation de 180°, de les remettre en position et de retourner à une position neutre.

Pour la réalisation de machines à cadence élevée et à grande fiabilité, il est nécessaire de réaliser un bras double actionné par des commandes mécaniques simples et pourvu de dispositions évitant toute rotation lorsque le bras est en position de coulissement intermédiaire entre la position de prise d'outil et la position de dégagement de la broche.

On connaît par le brevet US 4 300 278 un dispositif changeur d'outil de ce type comportant un bras double porté par un arbre vertical coulissant et rotatif selon son axe entre une position de prise d'outil et une position d'échange par rotation à 180°, une pince étant prévue pour porter un outil (21) à chaque extrémité du bras double, chaque pince comportant un doigt de verrouillage repoussé élastiquement vers l'outil et monté à l'extrémité d'une tige coulissante dans le bras parallèlement à son axe dont l'autre extrémité la plus proche de l'arbre rotatif (3) vient en butée sur une pièce montée coulissante dans le bras perpendiculairement à son axe et parallèlement à l'arbre rotatif et comportant un évidement de déverrouillage qui vient en regard de l'extrémité de la tige quand la piece (27) est entraînée contre l'action des moyens élastiques (30) lorsque le bras double est en position correspondant à la rétraction de l'arbre.

La pièce coulissant verticalement est constamment repoussée élastiquement vers le haut et porte un ergot supérieur qui vient en contact avec une surface de roulement porté par le bâti de la machine lorsque le bras est au voisinage de la position haute, pour être repoussé vers le bas jusqu'à déverrouiller le doigt de verrouillage d'outil lorsque le bras atteint la position haute.

L'invention vise à perfectionner un tel dispositif en assurant la sécurité de fonctionnement de ce verrouillage, afin d'éviter que les outils ne se dégagent des pinces pendant les mouvements de rotation sous l'effet de leur inertie.

Ce but est atteint selon l'invention par la partie caracterisante de la revendication. Le détecteur de position permet de s'assurer que la butée de verrouillage du doigt a repris sa place lorsque la course de descente du bras, nécessaire et suffisante au verrouillage du doigt, a été parcourue.

Avantageusement la liaison entre l'arbre portant le bras double et l'extrémité de la tige du vérin assurant ses mouvements verticaux est une liaison élastique par l'intermédiaire d'au moins un ressort, repoussant ledit arbre vers le haut et autorisant un déplacement du bras vers le bas. Cette disposition permet, lors du desserrage d'un outil d'exercer sur celui-ci une action de décollement du cône de broche, action provoquant un déplacement de l'ordre de 1 à 2 mm de l'outil vers le bas.

Le dispositif de l'invention est décrit plus en détail dans la description ci-après, avec référence au dessin annexé sur lequel:

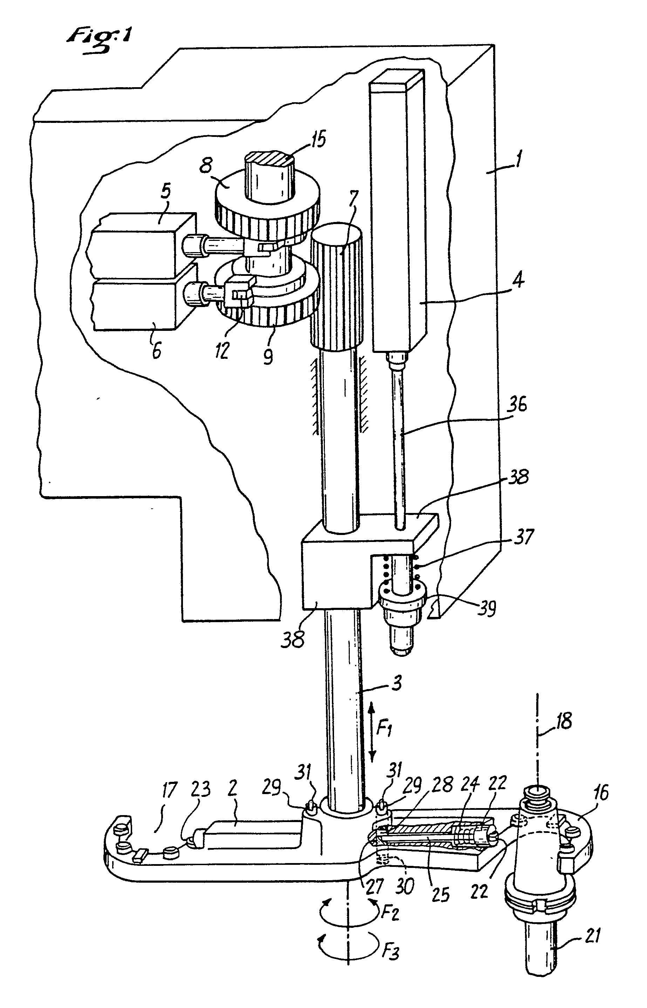

La figure 1 est un croquis schématique d'ensemble du dispositif, le bras étant en position basse.

La figure 2 est une vue en élévation de l'ensemble d'un exemple de réalisation, le bras étant en position haute.

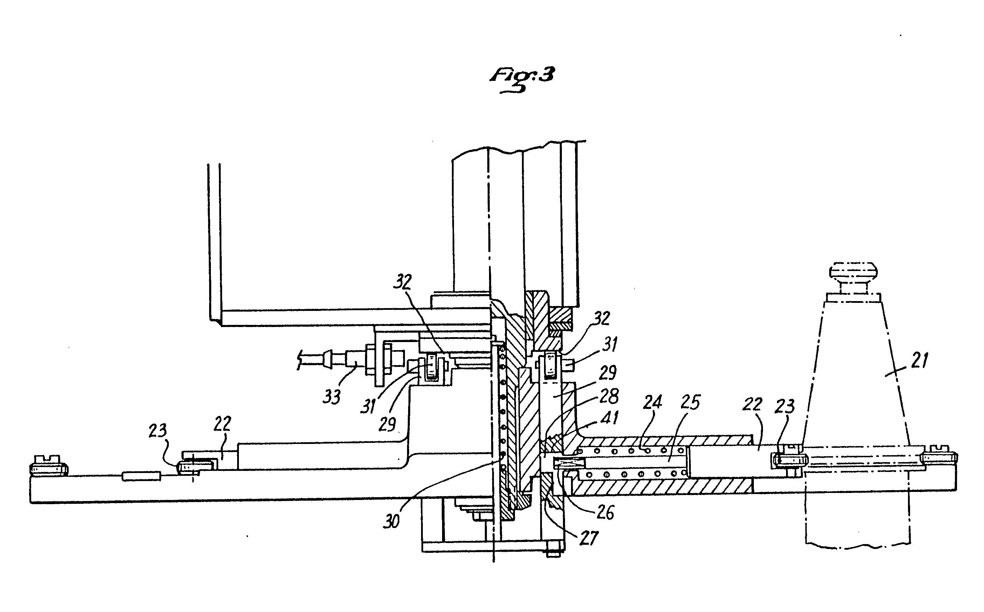

La figure 3 est une vue en élévation et en coupe verticale axiale du bras double de l'exemple de réalisation de la figure 2, illustrant le système de verrouillage des outils dans le bras.

En se reportant à ces figures, on voit que le bâti de la machine est schématiquement représenté en 1 et porte un bras double 2 monté à l'extrémité d'un arbre vertical 3 coulissant verticalement selon les flèches $F_1$ entre une position haute et une position basse et susceptible de rotation selon les flèches $F_2$ et $F_3$.

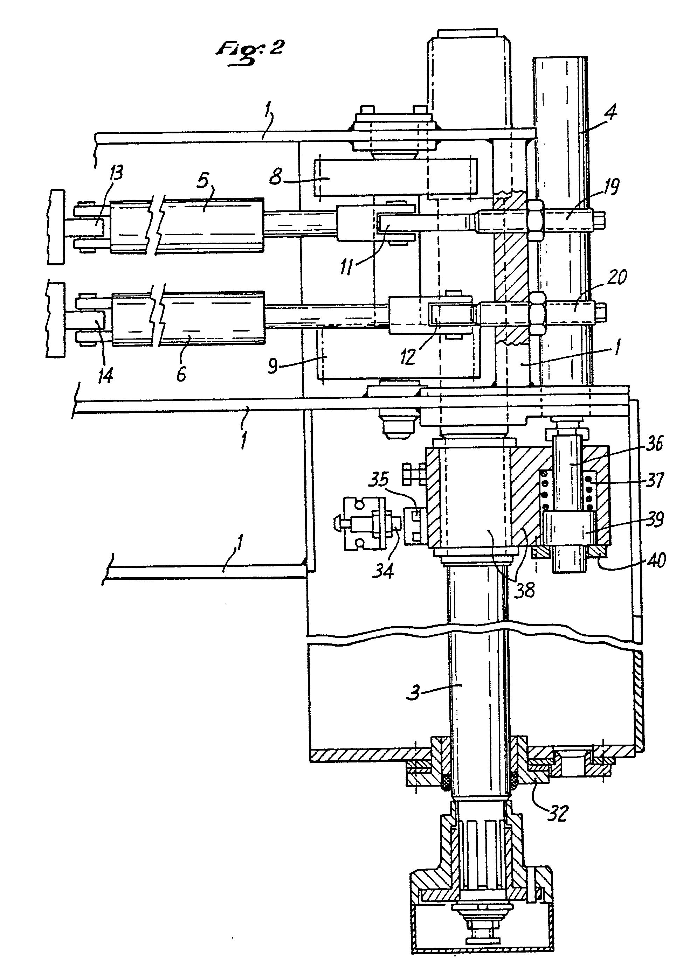

Ces trois mouvements sont obtenus par trois vérins séparés, le vérin 4 assurant le coulissement vertical en position haute et basse, le vérin 5 la rotation en position haute et le vérin 6 la rotation en position basse; l'arbre 2 porte à sa partie supérieure un pignon 7 qui coopère selon sa position, tantôt avec le pignon (ou secteur denté) 8, tantôt avec le pignon (ou secteur denté) 9, les pignons 8 et 9 étant superposés et de même diamètre, la distance qui les dépare ainsi que la longueur du pignon 7 étant établis en rapport avec la longueur de la course verticale du bras de telle sorte que le pignon 7 engrène avec le pignon 8 seulement lorsqu'il est en position haute et avec le pignon 9 seulement lorsqu'il est en position basse. Les pignons 8 et 9 sont supportés par le bâti de la machine ainsi que les vérins 5 et 6 qui les entraînent respectivement par les manetons 11 et 12 eux-mêmes montés sur le bâti 1 par les articulations 13 et 14 (figure 2).

Dans l'exemple représenté, les pignons 8 et 9 sont montés tous sur le même axe 15.

La course du vérin inférieur 6 est établie pour fournir une rotation du bras de 180° (rotation $F_3$) entre les deux positions du bras dans lesquelles l'axe de l'une des pinces 16 et 17 coïncide avec l'axe de broche schématisé en 18, lorsque la broche est en position de changement d'outil.

Des butées de réglage de fin de course des vérins 5 et 6, telles les butées 19, 20 (figure 2) sont avantageusement prévues pour un positionnement rigoureux en fin de course.

La course du vérin supérieur 5 est établie pour fournir une rotation du bras (rotation $F_3$) entre l'une des positions précédentes et une position intermédiaire prédeterminée, destinée à servir de position d'attente et placée par exemple à 90° environ des positions d'échange.

Avec cette disposition, les mouvements du bras 2 peuvent être établis en séquence, avec une cadence élevée, par des moyens mécaniques très simples et fiables, les positions du bras 2 étant très rigoureusement contrôlées à tous les stades de la séquence et notamment au moment de la prise d'outil.

Les mouvements du bras 2, commandés par le vérin 5, seront alternatifs (tantôt dans un sens, tantôt dans l'autre, comme indiqué par les flèches F₂).

Les mouvements du bras 2, commandés par le vérin 6 pourront être toujours dans le même sens (comme indiqué par la flèche F₃), le vérin 5 revenant à sa position initiale lorsque le bras est en position haute.

La séquence des mouvements est la suivante:

Le bras 2 étant en position haute, neutre, le vérin 5 le fait tourner jusqu'à la position de prise d'outil; ensuite le vérin 4 amène le bras 2 en position basse; dans cette position, le vérin 6 provoque une rotation de 180° du bras 2 qui est alors ramené en position haute par le vérin 4; enfin le vérin 5 ramène le bras 2 en position neutre.

Le dispositif étant destiné à fonctionner avec des vitesses élevées, il est important qu'un outil 21 pris par une pince 16, 17 ne puisse s'échapper par inertie, les accélérations et décélérations étant importantes et la masse de certains outils étant élevée.

A cette fin, le bras 2 comporte des doigts de verrouillage 22 de préférence terminés par des galets 23. Les doigts 22 coulissent dans le bras 2 et sont constamment sollicités vers les outils 21 par des ressorts 24. Chaque doigt 22 est monté à l'une des extrémités d'une tige 25 dont l'autre extrémité 26 vient en butée sur une pièce 27 lorsque le bras n'est pas en position haute. La pièce 27 coulisse parallèlement à l'axe du bras et comporte un évidement de déverrouillage 28 qui vient en regard de l'extrémité 26 de la tige 27, lorsque le bras est en position haute.

Dans l'exemple représenté, la pièce 27 est une face de butée prévue dans un cylindre coulissant 29 constamment repoussé élastiquement vers le haut par le ressort 30, et portant à sa partie supérieure un galet 31; lorsque le bras 2 n'est pas en position haute, la surface 27 se place devant la tige 26 et assure le verrouillage de l'outil 21.

Lorsque le bras 2 approche de la position haute, les galets 31 viennent en contact avec la surface de roulement 32 portée par le bâti 1 de la machine et sont arrêtés dans leur ascension, tandis que le bras 2 continue sa course. La pièce 29 s'abaisse relativement au bras 2 en comprimant le ressort 30 et l'évidement 28 vient en regard de l'extrémité 26 de la tige 25. Le galet 23 est alors déverrouillé et la rotation du bras 2 peut réaliser la prise de l'outil 21; mais dès que le bras 2 redescend, le ressort 30 repousse les cylindres 29 et la butée de verrouillage 27 reprend sa place.

Un dispositif détecteur de position formé des deux détecteurs 33 et 34, l'un opérant sur un galet 31 et l'autre sur une pièce 35 liée au bras 2 ou à l'arbre 3 permet d'assurer la sécurité de fonctionnement de ce verrouillage. Le galet 31, en effet, doit rester en contact avec la surface de roulement 32 jusqu'à ce que le bras 2 soit descendu d'une course suffisante pour que la butée 27 soit en regard de l'extrémité de tige 26. Si les signaux fournis par les détecteurs 33 et 34 montrent qu'il n'est est pas ainsi, la séquence de changement d'outil est interrompue.

Pour qu'une telle disposition de verrouillage fonctionne de façon sure, il est préférable que la fin de course du bras vers le haut soit constituée par l'arrivée en butée d'une pièce liée au bras 2 sur une pièce liée au bâti ou en position déterminée par rapport au bâti, afin que le mouvement relatif des cylindres 29, par rapport aux extrémités de tige 26, soit rigoureux.

En outre, l'extrémité de la tige 36 du vérin 4 est reliée à l'arbre 3 par l'intermédiaire du ressort 37 repoussant l'arbre 3 vers le haut par rapport à la tige 36 (le ressort 37 est logé dans une pièce 38 liée à l'arbre 3 et repousse l'extrémité 39 de la tige 36 contre une butée 40 liée à la pièce 38).

Cette disposition rend possible, lors du desserrage de l'outil dans le cône de broche, d'exercer sur l'outil un effort de décollement qui provoque une descente du bras 2 de l'ordre de 1 à 2 mm sans modification de position de l'extrémité 39. De même, à la mise en place d'un outil dans le cône de broche, la fin du mouvement de remontée du bras peut être combinée avec une action de serrage de l'outil dans le cône.

**Revendication**

Dispositif changeur d'outil pour machine outil comportant un bras double (2) monté à l'extrémité d'un arbre (3) coulissant et rotatif selon son axe entre une position de prise d'outil et une position d'échange par rotation à 180°, une pince (16, 17) étant prévue pour porter un outil (29) à chaque extrémité du bras double (2), chaque pince comportant un doigt de verrouillage (22) repoussé élastiquement vers l'outil et monté à l'extrémité d'une tige (25) coulissante dans le bras (2) parallèlement à son axe dont l'autre extrémité (26) la plus proche de l'arbre rotatif (3) vient en butée sur une pièce (27) montée coulisante dans le bras perpendiculairement à son axe et parallèlement à l'arbre rotatif et comportant un évidement de déverrouillage (28) qui vient en regard de l'extrémité (26) de la tige (25) quand la pièce (27) est entrainée contre l'action des moyens élastiques (30) lorsque le bras double est en position correspondant à la rétraction de l'arbre caractérisé par un dispositif détecteur (33, 34) de position, qui contrôle la position de la piece (27) le long de l'axe de l'arbre (3), qui vérifie que, la pièce (27), formant butée pour l'extrémité (26) de la tige (25), a repris sa place de verrouillage sous l'action des moyens élastiques (30) dès que la course d'extension de l'arbre (3) nécessaire et suffisante au verrouillage de l'outil par le doigt (22) a été parcourue, et qui interrompt la séquence de changement d'outil dans le cas contraire.

**Patentanspruch**

Werkzeugwechselvorrichtung für Werkzeugmaschinen mit einem Doppelarm (2), der am Ende einer Welle (3) angeordnet ist, die drehbar und entlang ihrer Achse zwischen einer Werkzeugaufnahmestellung und einer Wechselstellung durch Drehung um 180°, verschiebbar ist, mit einer Zange (16, 17) die zum Aufnehmen eines Werkzeugs (21) an jedem Ende des Doppelarms (2) vorgesehen ist, wobei jede Zange einen Riegelfinger (22) aufweist, der elastisch an das Werkzeug gedrückt wird und am Ende einer Stange (25) angeordnet ist, die in dem Arm (2) parallel zu dessen Achse verschiebbar ist, dessen anderes Ende (26), das der Drehwelle (3) am nächsten ist, in Anschlag an ein Teil (27) kommt, das in dem Arm senkrecht zu seiner Achse und parallel zur Drewelle verschiebbar angeordnet ist, und eine Entriegelungsvertiefung (28) aufweist, die dem Ende (26) der Stange (25) gegenüberliegend kommt, wenn das Teil (27) gegen die Wirkung elastischer Einrichtungen (30) mitgenommen wird, während der Doppelarm in einer der Einzugsstellung der Welle entsprechenden Position ist, gekennzeichnet durch eine Positionserfassungseinrichtung (33, 34), die die Position des Teils (27) entlang der Achse der Welle (3) steuert, die überprüft, daß das einen Anschlag für das Ende (26) der Stange (25) bildende Teil (27) seine Riegelstellung unter Wirkung der elastischen Einrichtungen (30) wieder eingenommen hat, sobald die Ausfahrstrecke der Welle (3), die notwendig und ausreichend ist für die Verriegelung des Werkzeugs durch den Finger (22), durchgeführt wurde, und die den Vorgang des Werkzeugwechsels im umgekehrten Fall unterbricht.

**Claim**

Tool changing device for machine-tool comprising a double arm (2) mounted on the end of a shaft (3) which shaft is slidable and rotatable about its axis between a tool-gripping position and an exchange position at 180°, a clamping means (16, 17) being provided for holding a tool (21) at each end of the double arm (2), each clamping means comprising a locking finger (22) elastically pushed toward the tool and mounted at the end of a rod (25) sliding inside the arm (2) in parallel to its axis the other end (26) of which rod which is closest to the rotary shaft (3), abuts against a part (27) mounted for sliding inside the arm perpendicularly to its axis and in parallel to the rotary shaft, and comprising an unlocking recess (28) which is brought opposite the end (26) of the rod (25) when the part (27) is driven against the action of electric means (30) and when the double arm is in the position corresponding to the retracting of the shaft, characterized by a position-detecting device (33, 34) controlling the position of the part (27) along the axis of the shaft (3), checking that the part (27) forming abutment for the end (26) of the rod (25), has resumed its locking position under the action of the elastic means (30) as soon as the extending stroke of the shaft (3) which is necessary and adequate for locking the tool in position by the finger (22) has been completed, and interrupting the tool-changing sequence in the opposite case.

Fig:1

0 128 089

*Fig. 2*

Fig.3